(19) Europäisches Patentamt
European Patent Office
Office européen des brevets

(11) **EP 4 010 710 B1**

(12) **EUROPEAN PATENT SPECIFICATION**

(45) Date of publication and mention
of the grant of the patent:
**18.09.2024   Bulletin 2024/38**

(21) Application number: **20764769.4**

(22) Date of filing: **06.08.2020**

(51) International Patent Classification (IPC):
*G01P 21/00* (2006.01)      *G01P 15/08* (2006.01)
*G07C 5/00* (2006.01)

(52) Cooperative Patent Classification (CPC):
**G01P 21/00; G01P 15/0891;** G07C 5/008

(86) International application number:
**PCT/IB2020/057427**

(87) International publication number:
**WO 2021/028789 (18.02.2021 Gazette 2021/07)**

(54) **SYSTEM AND METHOD FOR CALIBRATING A DEVICE FOR THE DETECTION OF ACCIDENTS, DRIVING STYLES AND LOCATION OF MOBILE INDUSTRIAL AND/OR AGRICULTURAL VEHICLES AND MACHINERY**

SYSTEM UND VERFAHREN ZUM KALIBRIEREN EINER VORRICHTUNG ZUR ERFASSUNG VON UNFÄLLEN, FAHRSTILEN UND ORTUNG VON MOBILEN INDUSTRIELLEN UND/ODER LANDWIRTSCHAFTLICHEN FAHRZEUGEN UND MASCHINEN

SYSTÈME ET PROCÉDÉ D'ÉTALONNAGE D'UN DISPOSITIF POUR LA DÉTECTION D'ACCIDENTS, DE STYLES DE CONDUITE ET D'EMPLACEMENTS DE VÉHICULES ET DE MACHINES MOBILES INDUSTRIELS ET/OU AGRICOLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2019   IT 201900014592**

(43) Date of publication of application:
**15.06.2022   Bulletin 2022/24**

(73) Proprietor: **Ubiquicom S.r.l.**
**20141 Milano (IT)**

(72) Inventor: **ORLANDO, Michele**
**20068 Peschiera Borromeo (Milano) (IT)**

(74) Representative: **Tansini, Elio Fabrizio**
**Bugnion S.p.A.**
**Viale Lancetti 17**
**20158 Milano (IT)**

(56) References cited:
**WO-A1-2018/046023      DE-A1- 102016 124 826**
**US-A1- 2015 045 983**

## Description

## Technical field of the invention

The present invention relates to a system and method for calibrating a device for the detection of accidents, driving styles and location of ground vehicles.

In the following description, ground vehicles are intended as mobile industrial and/or agricultural vehicles and machinery.

## Prior art

In recent years, devices have been developed for the detection of accidents, driving and use styles and the location of ground vehicles also known in the sector as "Telematics Box" or "Telemetry Box" or, in jargon, "Blackbox" or "BlueBox".

For brevity, a "Blackbox" or "device for the detection of accidents, driving styles and location" will be referred to as a "telematic device" in the following description and claims.

Blackboxes are electronic devices designed to be installed on industrial machines and monitor the operating features thereof.

Blackboxes of a known type are equipped with accelerometers and other sensors, thanks to which analyses and considerations are carried out on the movements to which they are subjected when installed on a ground vehicle.

One of the main features of Blackboxes is the possibility to detect any impacts on a given ground vehicle.

Following an impact, the Blackbox is able to communicate information about the direction and intensity of the impact which has occurred.

Blackboxes of a known type have a substantially parallelepiped shape and use their own reference system. For example, the reference system chosen for the machines on which Blackboxes are installed is as follows:

- The Y axis points in the front direction of the forklift, according to the driving direction;
- The X axis points in the right direction of the driving direction;
- The Z axis exits the plane and points upwards.

The information on any impacts provided by the Blackbox is consistent with the reference system of the ground vehicle only if the two reference systems coincide.

However this is not always possible, as Blackboxes are mounted in different manners depending on the type of ground vehicle and the free space available for installation.

When installing a Blackbox on a given ground vehicle, great care must be taken to ensure that the spatial reference system of the Blackbox perfectly matches with that of the ground vehicle on which it is installed.

Great precision is therefore required when installing the Blackbox on the ground vehicle. In addition, often for logistical or space reasons, it is not always possible to install the Blackbox in the same optimal position on the ground vehicle, so as to perfectly match the Blackbox's spatial reference system with that of the ground vehicle on which it is installed.

It therefore became necessary to have a way to return the information provided by the Blackbox in the coordinate system thereof to the coordinate system of the machine, so as to have data consistent with the direction of impact and accelerations in general for the analysis of the driving and use style according to the driving reference system. The Applicant has observed that the solutions of the prior art have the following drawbacks:

- little or no installation flexibility;
- impossibility to determine the reference coordinate system of the Blackbox with respect to that of the vehicle on which it is installed;
- the consequent impossibility of managing a fleet of vehicles in a homogeneous manner with respect to the need to have an account of the reference coordinate system on which the acceleration measurements are carried out by the Blackbox sensors.

DE 10 2016 124826 A1 shows the alignment of sensors in a sensor network, wherein the sensor network comprises a plurality of sensors for determining a dynamic behaviour of a vehicle. A reference sensor is selected from the sensor network and an orientation measurement unit is placed on this reference sensor, whereby the orientation measurement axes of the orientation measurement unit are brought into alignment with the measurement axes of the reference sensor.

WO 2018/046023 A1 describes a monitoring device for a child safety seat determining the orientation quaternion of the vehicle with respect to earth by using orientation sensors linked to the vehicle. A mobile computing device having the requisite orientation sensors is placed on the seat of the vehicle in the intended location of the seating component of the child safety seat.

## Brief summary of the invention

The present invention relates to a calibration system of a telematic device as defined in accompanying claim 1 and the preferred embodiments thereof disclosed in dependent claims 2 to 8.

The Applicant sustains that the calibration system of a telematic device according to the present invention has the following advantages:

- it reduces the complexity of installing a telematic system on a ground vehicle, thus reducing installation costs;

- it increases the accuracy of the telematic system, with a significant reduction in errors;
- it greatly simplifies the calibration of the telematic device for the system user;
- it greatly facilitates user interaction with the calibration system of the telematic device, in order to monitor and/or modify the operation thereof, exploiting the advanced features and functionalities of modern mobile devices;
- it allows managing a fleet of vehicles in a homogeneous manner with respect to the need to have an account of the reference coordinate system on which the acceleration measurements are carried out by the Blackbox sensors;
- it ensures a high level of safety,
- it provides an efficient system and method for calibrating a device for the detection of accidents, driving styles and location of ground vehicles;
- it provides a system and method for calibrating a device for the detection of accidents, driving styles and location of ground vehicles which is highly reliable, easy to create and simple to use.

A calibration system of a telematic device for ground vehicles as defined in the appended claim 9 also constitutes an object of the present invention.

**Brief description of the drawings**

Additional features and advantages of the invention will become more apparent from the description which follows of a preferred embodiment and the variants thereof, provided by way of example with reference to the appended drawings, in which:

- Figure 1 schematically shows a calibration system of a telematic device according to the invention;

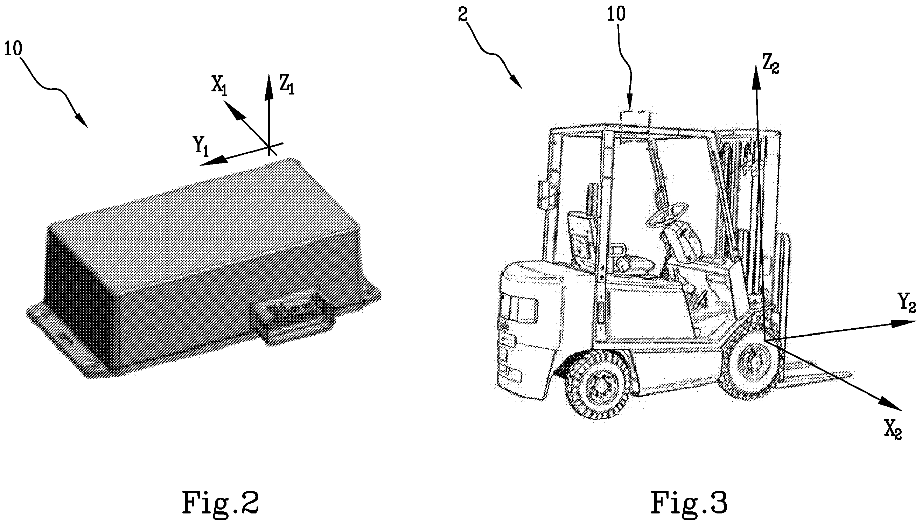

- Figure 2 schematically shows the reference axes of the telematic device used in the calibration system of Figure 1;
- Figure 3 schematically shows the reference axes of a ground vehicle on which the telematic device of Figure 2 is installed, used in the calibration system of Figure 1;

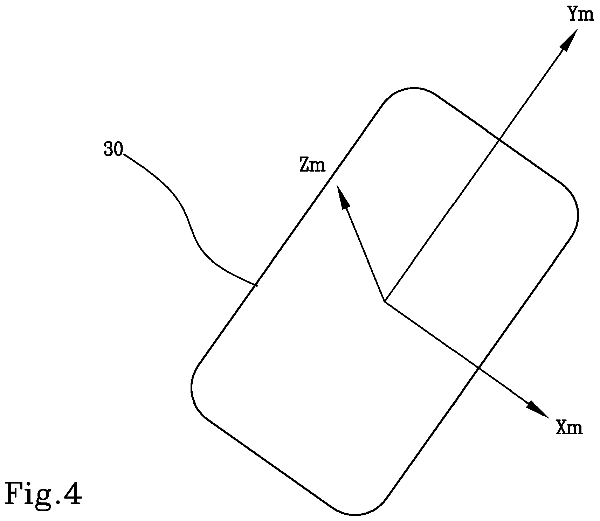

- Figure 4 schematically shows the reference axes of a mobile electronic device used in the calibration system of Figure 1;
- Figures 5 to 9 illustrate screenshots of the various steps of the calibration method according to the present invention.

**Detailed description of the invention**

It should be observed that in the following description, identical or analogous blocks, components or modules are indicated in the figures with the same numerical references, even where they are illustrated in different embodiments of the invention.

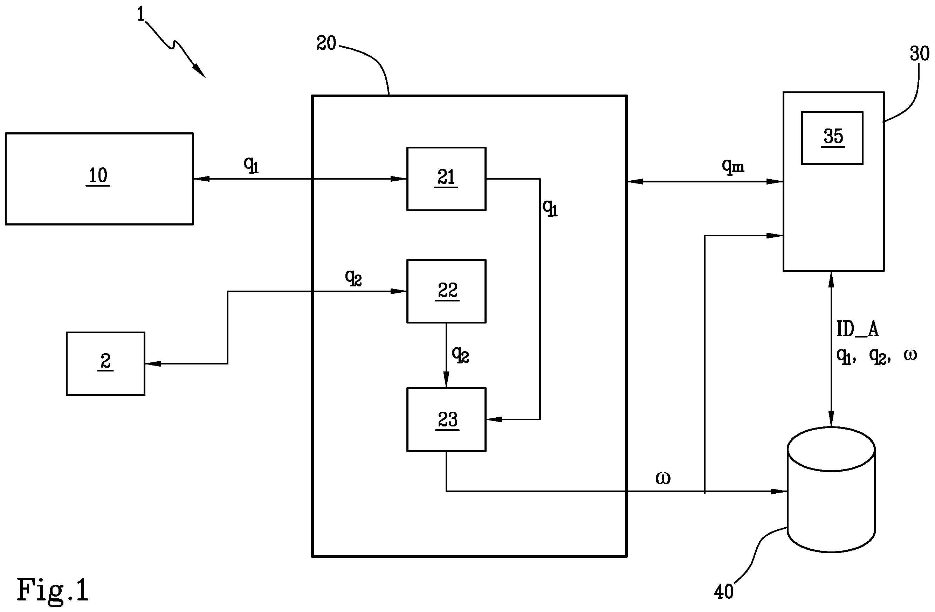

With reference to Figure 1, a calibration system of a telematic device 1 according to the invention is shown.

The calibration system 1 of a telematic device 10 may be mounted in a fixed position of the ground vehicle 2, such as on the roof of the vehicle, and possibly in part within the vehicle compartment.

The calibration system 1 of a telematic device 10 according to the present invention comprises:

- a telematic device 10;
- a processing unit 20;

  - a mobile electronic device 30.

The telematic device 10 is installable on a ground vehicle 2 and is configured to detect accidents, driving and use styles, and locate ground vehicles 2 and has spatial orientation q1 by means of suitable sensors.

The mobile electronic device 30 is configured to acquire the spatial orientation qm thereof, by means of suitable sensors of a known type, and to transmit and receive wireless data. In particular, the mobile electronic device is configured to transmit the acquired spatial orientation qm to a remote server 40.

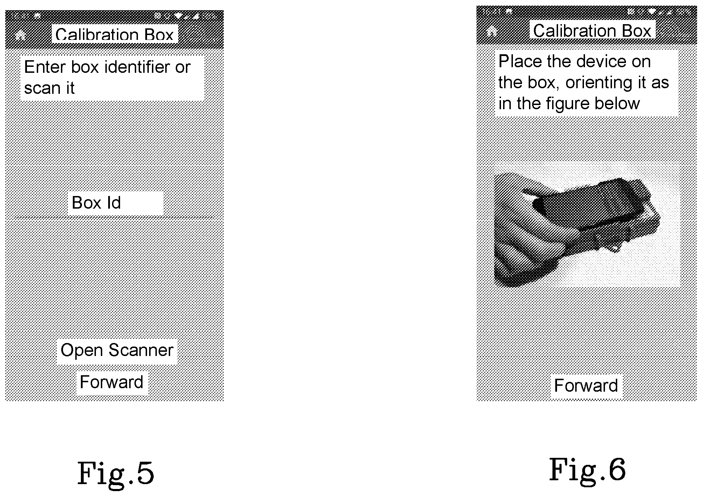

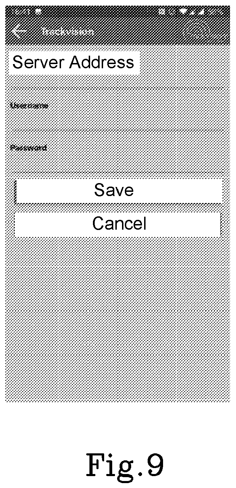

The mobile electronic device 30 comprises a user interface 35 (e.g., a display) configured to display the various calibration steps to a user (see the sequence shown in figures 5 to 9).

The processing unit 20 comprises a first acquisition module 21 configured to acquire the spatial orientation q1 of said mobile electronic device 30 placed on said telematic device 10 installed on the ground vehicle 2 and a second acquisition module 22 configured to acquire the spatial orientation q2 of said mobile electronic device 30 placed on said ground vehicle 2, oriented according to the direction of travel thereof according to a given mode.

Furthermore, the processing unit 20 comprises a calculation module 23 configured to calculate the rotation w to be applied to the spatial orientation q1 of said telematic device 10 in order to align it with the spatial orientation q2 of said ground vehicle 2.

In general, it should be noted that in the present context and in the subsequent claims, the processing unit 20 is considered to be split into distinct functional modules (storage modules or operating modules) for the sole purpose of describing its functionalities clearly and completely.

Such processing unit can consist of a single electronic device, appropriately programmed to perform the functionalities described, and the different modules can correspond to hardware entities and/or routine software that are part of the programmed device.

Alternatively or additionally, these functionalities can be performed by a plurality of electronic devices on which the aforesaid functional modules can be distributed.

The processing unit 20 can also make use of one or more processors for executing the instructions contained in the memory modules.

Preferably, the mobile electronic device is one among a smartphone, a tablet or a portable computer.

The native operating system of the mobile electronic device 30 is Android or iOS. Alternatively, the mobile electronic device 30 is a device designed ad hoc which is capable of calibrating the telematic device 10.

A first aspect of the present invention provides a method for calibrating a telematic device 10 installable on a ground vehicle 2 by means of a mobile electronic device 30, comprising the steps of:

a) installing said telematic device 10 on a ground vehicle 2 according to a first spatial orientation q1;
b) placing the mobile electronic device 30 on said telematic device 10 installed on the ground vehicle 2 according to a predetermined orientation, so that the orientation of the mobile electronic device 30 coincides with the first spatial orientation q1 of the telematic device 10;
c) acquiring the first spatial orientation q1 of said mobile electronic device 30 placed on said telematic device 10;
d) placing the mobile electronic device 30 on said ground vehicle 2, orienting it according to the direction of travel thereof;
e) acquiring a second spatial orientation q2 of said mobile electronic device 30 placed on said ground vehicle 2 and oriented according to the direction of travel thereof;
f) calculating the angular rotation w to be applied to the first spatial orientation q1 of said telematic device 10 in order to align it with the second spatial orientation q2 of said ground vehicle 2.

Preferably, the mobile electronic device 30 is placed on the ground vehicle 2 by orienting it planarly with respect to the plane XY (ground or supporting surface of the ground vehicle) and/or indicating the inclination with respect thereto.

The mobile electronic device 30 is placed planarly with the screen facing upwards.

Preferably, the calibration method comprises the step of calculating the rotation to be applied to the vectors expressed in spatial coordinates q1 of the telematic device 10 in order to align them with the spatial coordinates of the ground vehicle 2.

Preferably, in step b) the mobile electronic device 30 is placed on the telematic device 10 so as to match a visible label or reference present on a surface of the telematic device 10 so that the orientation thereof is known and predetermined. In this way, the orientation of the mobile electronic device 30 coincides with the first spatial orientation q1 of the telematic device 10.

The calculation of the rotation to be applied to the vectors expressed in spatial coordinates q1 of the telematic device 10 in order to align them with the spatial coordinates of the ground vehicle 2 is carried out using quaternions.

Having to carry out readings from sensors automatically, the most robust mathematical formalism for the case is that of quaternions.

A quaternion is a vector magnitude defined by four coefficients [x,y,z,w] which is used to define orientations in space.

The object of the method and system according to the invention is to automatically and precisely identify the coefficients which express the rotation w to which to subject the impact vector returned by the telematic device 10 to return it to the coordinate system of the ground vehicle 2.

The calculation is carried out using two quaternions. In particular, given the two quaternions:

$$\vec{q}_1 = q_{1x}\vec{x} + q_{1y}\vec{y} + q_{1z}\vec{z} + q_{1w}\vec{w}$$

and

$$\vec{q}_2 = q_{2x}\vec{x} + q_{2y}\vec{y} + q_{2z}\vec{z} + q_{2w}\vec{w}$$

$\vec{q}_1$ is the quaternion which represents the spatial orientation of the box.

$\vec{q}_2$ is the quaternion which represents the spatial orientation of the forklift according to a given orientation, so that the orientation of the mobile electronic device 30 coincides with the first spatial orientation q1 of the telematic device 10.

Quaternions express rotations, the rotation to be applied to $\vec{q}_1$ to align it with $\vec{q}_2$ is also representable as a quaternion.

In particular, the resulting quaternion will be:

$$\vec{q}_r = \vec{q}_2' \cdot \vec{q}_1$$

Where the operator "'" represents the conjugation of the quaternion.

Advantageously, the method comprises the step of acquiring the unique identification number ID_A of the telematic device 10 which is being calibrated.

The unique identification number ID_A of the telematic device 10 which is being calibrated is acquired by entry in a text box or by scanning an identification code.

The scanned identification code is selected from at least a barcode; a code of an optical type; a radiofrequency code, such as a OR-code, RFID or NFC.

The method comprises sending to a remote server 40 the unique identification number ID_A of the telematic device 10 which is being calibrated and the rotation w to be applied to the vectors expressed in spatial coordinates q1 of the telematic device 10 in order to align them with the spatial coordinates of the ground vehicle 2.

Figures 5 to 9 illustrate the five steps of the calibration procedure.

In step 1 shown in figure 5, the application acquires (by text box or barcode scanning) the serial number of the box being calibrated.

In step 2, the application records the spatial orientation of the mobile electronic device 30, initially placed on the telematic device 10 according to the orientation shown in figure 6.

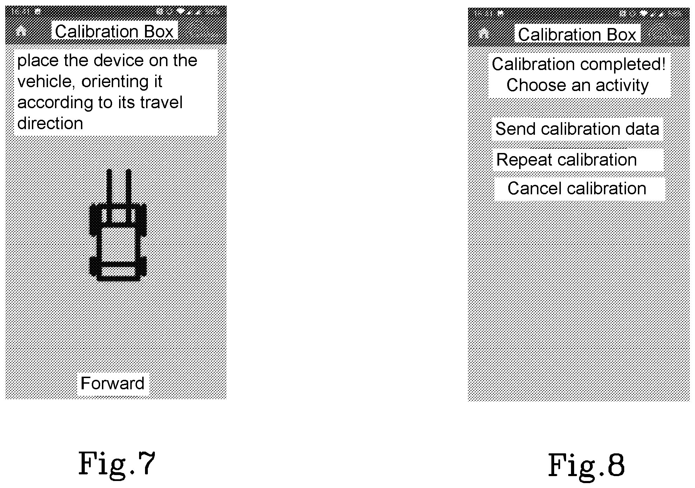

In step 3, the application records the spatial orientation q2 of the ground vehicle 2, according to the orientation shown in figure 7.

In step 4, the application calculates the rotation w to be applied to the vectors expressed in spatial coordinates q1 of the telematic device 10 in order to align them with the spatial coordinates of the ground vehicle 2.

If the setting is saved, the application sends the data to the portal present on the remote server 40.

If the orientation of the mobile device 30 does not allow tapping on the "Next" button displayed by a user interface 35, it is also possible to advance between the steps by pressing the volume keys of the mobile device 30.

The username, password and address of the portal hosting the save APIs can be set from the Server Settings section, which can be selected from the main menu of the user interface 30.

A second aspect of the present invention provides a system for calibrating a telematic device 10 installable on a ground vehicle 2 by means of a mobile electronic device 30, comprising:

a telematic device 10 installed on a ground vehicle 2 and configured to detect accidents and driving styles and locate ground vehicles 2 and having a spatial orientation q1;
a mobile electronic device 30 configured to acquire a spatial orientation qm and to transmit and receive wireless data;
a processing unit 20 comprising:

o a first acquisition module 21 configured to acquire the spatial orientation q1 of said mobile electronic device 30 placed on said telematic device 10 installed on the ground vehicle 2;
o a second acquisition module 22 configured to acquire the spatial orientation q2 of said mobile electronic device 30 placed on said ground vehicle 2 and oriented according to the direction of travel thereof;
o a calculation module 23 configured to calculate the rotation w to be applied to the spatial orientation q1 of said telematic device 10 in order to align it with the spatial orientation q2 of said ground vehicle 2.

A third aspect of the present invention provides a computer program which, when running on a computer, implements at least one or more steps of the method described above.

It is clear that the specific features are described in relation to different embodiments of the invention with an exemplary and non-limiting intent.

Obviously a person skilled in the art can make further modifications and variants to the present invention, in order to satisfy contingent and specific needs. For example, the technical features described in relation to an embodiment of the invention can be extrapolated therefrom and applied to other embodiments of the invention. Such modifications and variations are moreover embraced within the scope of the invention as defined by the following claims.

## Claims

1. A method for calibrating a telematic device (10) installable on a ground vehicle (2) by means of a mobile electronic device (30), comprising the steps of:

a) installing said telematic device (10) on a ground vehicle (2);
b) placing the mobile electronic device (30) on said telematic device (10) installed on the ground vehicle (2);
c) acquiring the spatial orientation (qm) of said mobile electronic device (30) placed on said telematic device (10);
d) placing the mobile electronic device (30) on said ground vehicle (2), orienting it according to the direction of travel thereof;
e) acquiring the spatial orientation (q2) of said mobile electronic device (30) placed on said ground vehicle (2) and oriented according to the direction of travel thereof;
f) calculating the rotation (w) to be applied to the spatial orientation (q1) of said telematic device (10) in order to align it with the spatial orientation (q2) of said ground vehicle (2).

2. The calibration method according to claim 1, wherein in step d) the mobile electronic device (30) is placed on said ground vehicle (2) and oriented planarly relative to the plane XY, or by indicating the inclination with respect to it.

3. The calibration method according to claim 1 or 2, comprising the step of calculating the rotation to be applied to the vectors expressed in spatial coordinates (q1) of the telematic device (10) in order to align them with the spatial coordinates of the ground vehicle (2).

4. The calibration method according to claim 3, wherein the calculation of the rotation to be applied to the vectors expressed in spatial coordinates (q1) of telematic device (10) in order to align them with the spatial coordinates of the ground vehicle (2) is carried out using quaternions.

5. The calibration method according to one or more of the preceding claims, comprising the acquisition of the unique identification number (ID_A) of the telematic device (10) that is being calibrated.

6. The calibration method according to claim 5, wherein the unique identification number (ID_A) of the telematic device (10) that is being calibrated is acquired by entry in a text box or by scanning an identification code.

7. The calibration method according to claim 6, wherein the scanned identification code is selected from at least:

   - a barcode;
   - a code of an optical type;
   - a radiofrequency code, such as a OR-code, RFID or NFC.

8. The calibration method according to one or more of the preceding claims, wherein the unique identification number (ID_A) of the telematic device (10) that is being calibrated and the rotation to be applied to the vectors expressed in spatial coordinates (q1) of the telematic device (10) in order to align them with the spatial coordinates of the ground vehicle (2) is sent to a remote server (40).

9. A system for calibrating a telematic device (10) installed on a ground vehicle (2) by means of a mobile electronic device (30), comprising:

   a telematic device (10) installed on said ground vehicle (2) and configured to detect accidents, driving styles and locate ground vehicles (2) and having a spatial orientation (q1);
   a mobile electronic device (30) configured to acquire a spatial orientation (qm) and to transmit and receive wireless data;
   a processing unit (20) comprising:

   o a first acquisition module (21) configured to acquire the spatial orientation (q1) of said mobile electronic device (30) placed on said telematic device (10) installed on the ground vehicle (2);
   o a second acquisition module (22) configured to acquire the spatial orientation (q2) of said mobile electronic device (30) placed on said ground vehicle (2) and oriented according to the direction of travel thereof;

   o a calculation module (23) configured to calculate the rotation (w) to be applied to the spatial orientation (q1) of said telematic device (10) in order to align it with the spatial orientation (q2) of said ground vehicle (2).

10. The calibration system (1) according to claim 9, wherein the mobile electronic device (30) is selected from among:

    - a smartphone;
    - a tablet;
    - a portable personal computer.

11. The calibration system (1) according to claim 9 or 10, wherein the mobile electronic device (30) comprises a user interface (35) configured to display the various calibration steps to a user.

12. The method according to claims 1 and 3 to 8, wherein steps c), e) and f) of claim 1, and the steps of claims 3 to 8 are implemented by means of a computer.

**Patentansprüche**

1. Verfahren zum Kalibrieren einer Telekommunikationsvorrichtung (10), die auf einem Landfahrzeug (2) installierbar ist, durch eine mobile elektronische Vorrichtung (30), umfassend die folgenden Schritte:

   a) Installieren der Telekommunikationsvorrichtung (10) auf einem Landfahrzeug (2);
   b) Platzieren der mobilen elektronischen Vorrichtung (30) auf der auf dem Landfahrzeug (2) installierten Telekommunikationsvorrichtung (10);
   c) Erfassen der räumlichen Ausrichtung (qm) der mobilen elektronischen Vorrichtung (30), die auf der Telekommunikationsvorrichtung (10) platziert ist;
   d) Platzieren der mobilen elektronischen Vorrichtung (30) auf dem Landfahrzeug (2) und deren Ausrichten nach dessen Fahrtrichtung;
   e) Erfassen der räumlichen Ausrichtung (q2) der mobilen elektronischen Vorrichtung (30), die auf dem Landfahrzeug (2) platziert und nach dessen Fahrtrichtung ausgerichtet ist;
   f) Berechnen der Drehung (w), die auf die räumliche Ausrichtung (q1) der Telekommunikationsvorrichtung (10) anzuwenden ist, um diese fluchtend zur räumlichen Ausrichtung (q2) des Landfahrzeugs (2) anzuordnen.

2. Kalibrierungsverfahren nach Anspruch 1, wobei die mobile elektronische Vorrichtung (30) in Schritt d) auf dem Landfahrzeug (2) platziert und planar relativ zur Ebene XY oder durch Anzeigen der Neigung in

**3.** Kalibrierungsverfahren nach Anspruch 1 oder 2, umfassend den Schritt zum Berechnen der Drehung, die auf die in räumlichen Koordinaten (q1) der Telekommunikationsvorrichtung (10) angegebenen Vektoren anzuwenden ist, um diese fluchtend zu den räumlichen Koordinaten des Landfahrzeugs (2) anzuordnen.

**4.** Kalibrierungsverfahren nach Anspruch 3, wobei das Berechnen der Drehung, die auf die in räumlichen Koordinaten (q1) der Telekommunikationsvorrichtung (10) angegebenen Vektoren anzuwenden ist, um diese fluchtend zu den räumlichen Koordinaten des Landfahrzeugs (2) anzuordnen, anhand von Quaternionen durchgeführt wird.

**5.** Kalibrierungsverfahren nach einem oder mehreren der vorhergehenden Ansprüche, umfassend das Erfassen der eindeutigen Kennnummer (ID_A) der Telekommunikationsvorrichtung (10), die kalibriert wird.

**6.** Kalibrierungsverfahren nach Anspruch 5, wobei die eindeutige Kennnummer (ID_A) der Telekommunikationsvorrichtung (10), die kalibriert wird, durch die Eingabe in eine Textbox oder das Scannen eines Kenncodes erfasst wird.

**7.** Kalibrierungsverfahren nach Anspruch 6, wobei der gescannte Kenncode zumindest aus Folgendem ausgewählt wird:

- einem Barcode;
- einem Code eines optischen Typs;
- einem Funkfrequenzcode wie einem QR-Code, RFID oder NFC.

**8.** Kalibrierungsverfahren nach einem oder mehreren der vorhergehenden Ansprüche, wobei die eindeutige Kennnummer (ID_A) der Telekommunikationsvorrichtung (10), die kalibriert wird, und die Drehung, die auf die in räumlichen Koordinaten (q1) der Telekommunikationsvorrichtung (10) angegebenen Vektoren anzuwenden ist, um diese fluchtend zu den räumlichen Koordinaten des Landfahrzeugs (2) anzuordnen, an einen Remote-Server (40) übermittelt werden.

**9.** System zum Kalibrieren einer Telekommunikationsvorrichtung (10), die auf einem Landfahrzeug (2) installiert ist, durch eine mobile elektronische Vorrichtung (30), umfassend:

eine Telekommunikationsvorrichtung (10), die auf dem Landfahrzeug (2) installiert und ausgelegt ist, um Unfälle, Fahrstile zu erfassen und Landfahrzeuge (2) zu orten, aufweisend eine räumliche Ausrichtung (q1);
eine mobile elektronische Vorrichtung (30), die ausgelegt ist, um eine räumliche Ausrichtung (qm) zu erfassen und drahtlos Daten zu übermitteln und zu empfangen;
eine Verarbeitungseinheit (20), umfassend:

o ein erstes Erfassungsmodul (21), das ausgelegt ist, um die räumliche Ausrichtung (q1) der auf der auf dem Landfahrzeug (2) installierten Telekommunikationsvorrichtung (10) platzierten mobilen elektronischen Vorrichtung (30) zu erfassen;
o ein zweites Erfassungsmodul (22), das ausgelegt ist, um die räumliche Ausrichtung (q2) der auf dem Landfahrzeug (2) platzierten und nach dessen Fahrtrichtung ausgerichteten mobilen elektronischen Vorrichtung (30) zu erfassen;
o ein Kalkulationsmodul (23), das ausgelegt ist, um die Drehung (w) zu berechnen, die auf die räumliche Ausrichtung (q1) der Telekommunikationsvorrichtung (10) anzuwenden ist, um diese fluchtend zur räumlichen Ausrichtung (q2) des Landfahrzeugs (2) anzuordnen.

**10.** Kalibrierungssystem (1) nach Anspruch 9, wobei die mobile elektronische Vorrichtung (30) aus Folgendem ausgewählt ist:

- einem Smartphone;
- einem Tablet;
- einem Laptop.

**11.** Kalibrierungssystem (1) nach Anspruch 9 oder 10, wobei die mobile elektronische Vorrichtung (30) eine Benutzerschnittstelle (35) aufweist, die ausgelegt ist, um einem Nutzer die verschiedenen Kalibrierungsschritte anzuzeigen.

**12.** Verfahren nach den Ansprüchen 1 und 3 bis 8, wobei die Schritte c), e) und f) aus Anspruch 1 und die Schritte der Ansprüche 3 bis 8 mittels eines Computers durchgeführt werden.

**Revendications**

**1.** Procédé d'étalonnage d'un dispositif télématique (10) installable sur un véhicule terrestre (2) au moyen d'un dispositif électronique mobile (30), comprenant les étapes de :

a) installer ledit dispositif télématique (10) sur un véhicule terrestre (2) ;

b) placer le dispositif électronique mobile (30) sur ledit dispositif télématique (10) installé sur le véhicule terrestre (2) ;

c) acquérir l'orientation spatiale (qm) dudit dispositif électronique mobile (30) placé sur ledit dispositif télématique (10) ;

d) placer le dispositif électronique mobile (30) sur ledit véhicule terrestre (2), en l'orientant selon la direction de déplacement de ce dernier ;

e) acquérir l'orientation spatiale (q2) dudit dispositif électronique mobile (30) placé sur ledit véhicule terrestre (2) et orienté selon la direction de déplacement de celui-ci ;

f) calculer la rotation (w) à appliquer à l'orientation spatiale (q1) dudit dispositif télématique (10) afin de l'aligner sur l'orientation spatiale (q2) dudit véhicule terrestre (2).

2. Procédé d'étalonnage selon la revendication 1, dans lequel à l'étape d) le dispositif électronique mobile (30) est placé sur ledit véhicule terrestre (2) et orienté de façon plane par rapport au plan XY, ou en indiquant l'inclinaison par rapport à celui-ci.

3. Procédé d'étalonnage selon la revendication 1 ou 2, comprenant l'étape de calculer la rotation à appliquer aux vecteurs exprimés en coordonnées spatiales (q1) du dispositif télématique (10) afin de les aligner avec les coordonnées spatiales du véhicule terrestre (2).

4. Procédé d'étalonnage selon la revendication 3, dans lequel le calcul de la rotation à appliquer aux vecteurs exprimés en coordonnées spatiales (q1) du dispositif télématique (10) afin de les aligner avec les coordonnées spatiales du véhicule terrestre (2) est effectué à l'aide de quaternions.

5. Procédé d'étalonnage selon une ou plusieurs des revendications précédentes, comprenant l'acquisition du numéro d'identification unique (ID_A) du dispositif télématique (10) en cours d'étalonnage.

6. Procédé d'étalonnage selon la revendication 5, dans lequel le numéro d'identification unique (ID_A) du dispositif télématique (10) en cours d'étalonnage est acquis par saisie dans une zone de texte ou par balayage d'un code d'identification.

7. Procédé d'étalonnage selon la revendication 6, dans lequel le code d'identification scanné est choisi à partir d'au moins :

- un code-barres ;
- un code de type optique ;
- un code de radiofréquence, tel qu'un code QR, RFID ou NFC.

8. Procédé d'étalonnage selon une ou plusieurs des revendications précédentes, dans lequel le numéro d'identification unique (ID_A) du dispositif télématique (10) en cours d'étalonnage et la rotation à appliquer aux vecteurs exprimés en coordonnées spatiales (q1) du dispositif télématique (10) afin de les aligner sur les coordonnées spatiales du véhicule terrestre (2) sont envoyés à un serveur distant (40).

9. Système d'étalonnage d'un dispositif télématique (10) installé sur un véhicule terrestre (2) au moyen d'un dispositif électronique mobile (30), comprenant :

un dispositif télématique (10) installé sur ledit véhicule terrestre (2) et configuré pour détecter les accidents, les styles de conduite et localiser les véhicules terrestres (2) et ayant une orientation spatiale (q1) ;

un dispositif électronique mobile (30) configuré pour acquérir une orientation spatiale (qm) et pour transmettre et recevoir des données sans fil ;

une unité de traitement (20) comprenant :

o un premier module d'acquisition (21) configuré pour acquérir l'orientation spatiale (q1)

o ledit dispositif électronique mobile (30) placé sur ledit dispositif télématique (10) installé sur le véhicule terrestre (2) ;

o un second module d'acquisition (22) configuré pour acquérir l'orientation spatiale (q2) dudit dispositif électronique mobile (30) placé sur ledit véhicule terrestre (2) et orienté selon la direction de déplacement de celui-ci ;

o un module de calcul (23) configuré pour calculer la rotation (w) à appliquer à l'orientation spatiale (q1) dudit dispositif télématique (10) afin de l'aligner avec l'orientation spatiale (q2) dudit véhicule terrestre (2).

10. Système d'étalonnage (1) selon la revendication 9, dans lequel le dispositif électronique mobile (30) est choisi parmi :

- un smartphone ;
- une tablette ;
- un ordinateur personnel portable.

11. Système d'étalonnage (1) selon la revendication 9 ou 10, dans lequel le dispositif électronique mobile (30) comprend une interface utilisateur (35) configurée pour afficher les différentes étapes d'étalonnage à un utilisateur.

12. Procédé selon les revendications 1 et 3 à 8, dans lequel les étapes c), e) et f) de la revendication 1, et les étapes des revendications 3 à 8 sont mises en œuvre au moyen d'un ordinateur.

Fig.1

EP 4 010 710 B1

Fig.2

Fig.3

EP 4 010 710 B1

Fig.4

EP 4 010 710 B1

Calibration Box

Enter box identifier or scan it

Box Id

Open Scanner

Forward

Fig.5

Calibration Box

Place the device on the box, orienting it as in the figure below

Forward

Fig.6

**Fig.7**

**Fig.8**

EP 4 010 710 B1

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016124826 A1

- WO 2018046023 A1